# EUROPEAN PATENT APPLICATION

(11) **EP 1 142 800 A2**
(43) Date of publication of application: **10.10.2001**
(21) Application number: 01660061.1
(22) Date of filing: 06.04.2001
(51) Int. Cl.: B65D 77/20

(54) **Food supplies package**

(30) Priority: 06.04.2000 FI 20000822
(71) Applicant: Euran Kuluttajatuotteet Oy, 27231 Lappi (FI)
(72) Inventor: Lempinen, Reima, 27500 Kauttua (FI); Paltanen, Tiina, 28760 Pori (FI)
(74) Representative: Simmelvuo, Markku

(57) **Abstract**

The invention relates to a package for the packaging of foodstuffs. The package comprises a case capable of being opened and closed and comprising a mounting part (2) and a cover (3) fitted to close the case when fastened to the mounting part. According to the invention, the cover (3) is glued onto the case using a repeatedly releasable, biodegradable type of glue. In addition, the other parts of the case and cover can be manufactured from biodegradable materials. Thanks to the invention, the combination of cover and case is easy to use both in manual packaging and in industrial automated packaging systems. In addition, a backing part adhering to the adhesive part guarantees that the material or food placed in the package will not come into contact with the adhesive part itself.

## Description

The present invention relates to packages. In particular, the present invention relates to a new and improved foodstuff package and to a method for manufacturing a foodstuff package.

### Background of the invention

The popularity of ready-baked foods, such as various casserole foods, has been increasing in recent times. Such foods are traditionally packed in an aluminum casserole, then baked and finally the package is closed with a cover. In the case of an aluminum casserole, the cover is placed on top of the casserole, and the edges of the casserole are partially bent over the cover so that a tight and sturdy package is formed. However, this packaging method is slow and difficult to implement. In addition, the package is difficult to use especially if the cover is closed and opened several times. The problem is that the casserole does not retain its shape when the edges are being bent over the cover, the edges of the casserole are often stained and untidy, so the person closing the package may have his/her fingers soiled and other things around may get dirty, too. Besides, the cover is difficult to close again airtightly.

In prior art, a package is also used in which a case is closed with plastic. The plastic is heat-sealed onto the edges of the case. However, this type of package is difficult for an ordinary consumer to use as it requires a heat-sealing apparatus or equivalent. A further problem is that prior-art cover materials cannot be sealed if there are splashes or stains on the edges of the case.

Therefore, there is clearly a need in the market for a new type of package and packaging method that will allow the aforesaid problems to be eliminated. Thus, the object of the invention is to eliminate the problems described above. A specific object of the invention is to disclose a new type of method and packaging case that is easy to use, reliable and user-friendly. A further object of the invention is to disclose a package that can be recycled after use.

### Brief description of the invention

The case used in the invention is closed with a new type of cover comprising an adhesive part which is glued fast to the case. The cover also comprises a backing part whose size and shape have been designed so that they correspond to the size and shape of the open part of the food casserole. After the cover has been attached to the case, the backing part together with the case forms a continuous and tight closed space.

The case is a closeable package, box or receptacle with rigid walls, used as container. An example of the case of the invention is a food casserole used for the baking of foods and pastries in an oven. The casserole may be made of aluminum, cardboard which can be coated with different biopolymers, plastics or equivalent, or of similar material. The casserole may be provided with a gluing mounting by bending its edges outward with respect to the vertical direction of the casserole. The cover is preferably so implemented that the adhesive part extends sufficiently far beyond the edge of the backing so that the adhesive part will adhere to the gluing mounting. The adhesive joint may be implemented using a repeatedly releasable type of glue. All parts of the case and cover are preferably manufactured from biodegradable material.

The case may also comprise a tear-off part with perforations allowing it to be detached from the case. In addition, the cover is so attached to the tear-off part that when the latter is detached, the cover is also detached from the case. This is intended to allow the cover to be more easily opened the first time it is opened after manufacture of the package. In the method of the invention, a batch of material or food to be packaged is first placed in the case or casserole. After this, the food in the casserole may be baked, or if it is not to be baked, the casserole is taken directly to a casing device, by means of which the cover is fastened or glued to the case. The adhesive joint is implemented using repeatedly releasable glue. After the casserole has been provided with a cover, it can be passed under a press device or a roller to ensure that the cover adheres tightly to the edges of the casserole.

For assembly line packaging or other purposes, the cover may be formed from two parts so that it comprises a backing and an adhesive part separately. In this case, the cover is placed over the case so that the backing together with the case forms a closed and airtight space. Before the cover is attached to the case, the case may be perforated so as to form a tear-off part to which the cover is then attached.

As compared with prior art, the invention has the advantage that a package like this is easy to use both in manual packaging and in an industrial automated packaging process. In addition, thanks to the backing part adhering to the adhesive part, the material or food to be packaged will not come into contact with the adhesive part. Furthermore, the invention makes it possible to implement the cover using a repeatedly releasable type of glue. This makes the package significantly more convenient to use. As a further advantage of the invention, the parts forming the package - case, backing and adhesive part - can be manufactured from environmentally friendly materials, so after use they can be easily composted, recycled, disposed of together with bio-waste, or utilized as fuel for combustion.

In the following, the invention will be described with reference to the attached drawing, wherein
Fig. 1 presents a case according to the invention without a cover,
Fig. 2 presents a cover according to the invention, and
Fig. 3 presents a flow diagram representing a preferred embodiment of the method of the invention.

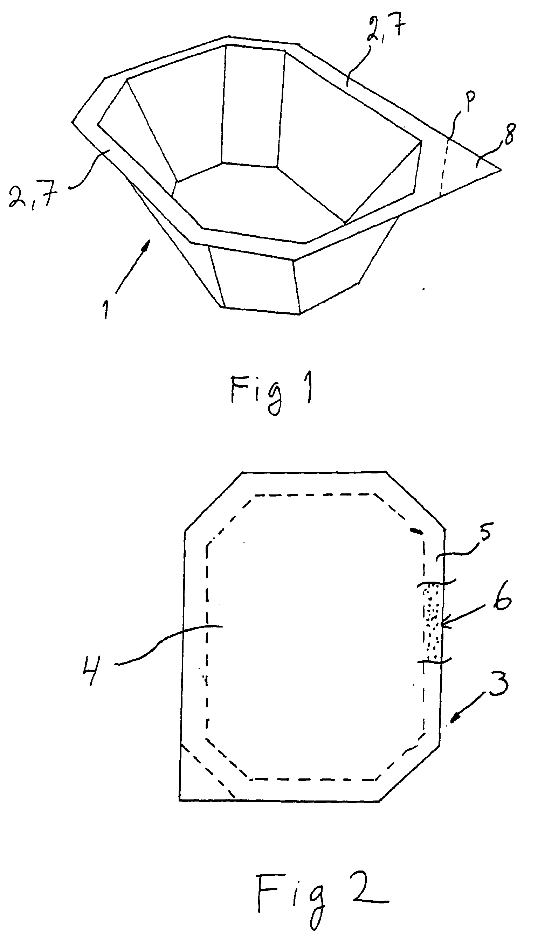

Fig. 1 presents a preferred embodiment of the foodstuff casserole according to the invention. The casserole is made of rigid cardboard accepted for use in foodstuff applications. It comprises a case part 1 and a mounting part 2. The mounting part has been formed by bending the edges 7 of the case outward so that the bent-out edges form a mounting to which the cover can be glued. The glue may be provided either on the cover to be placed on the case or on the gluing mounting, but preferably it is provided on the cover. Let it be noted that the case or casserole may be varied in size and shape, and the invention is not intended to be limited to the shape of case presented in Fig. 1. Moreover, the case in which provided with a tear-off part 8, which can be formed at any one of the corners of the case, although in this example it is shown as being formed with a perforation at the lower right corner. In addition, a tear-off part may be formed in some other part of the case, but it will be simplest to implement if placed at a corner.

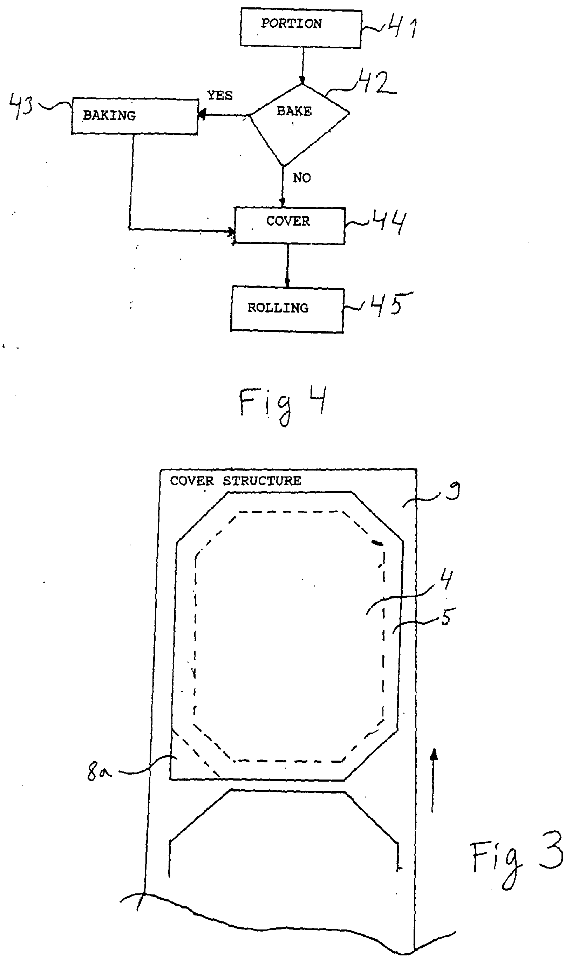

Fig. 2 presents a more detailed view of the cover 3 to be mounted on the case 1 with an adhesive joint. The cover consists of two parts. It has been formed by placing an adhesive part 5 upon a backing 4. The size and shape of the backing have been adapted to the size and shape of the open part of the case. The adhesive part 5 is so designed that it corresponds to the size and shape of the gluing mounting shown in Fig. 1. The two-part cover is preferably formed by placing the adhesive part onto the backing and gluing them together. At this stage, these parts may be in the form of larger sheets, and a cover fitting to a case or food casserole is formed by punching out the extra portions of the backing and adhesive part.

The adhesive part cover 3 may be made of either paper or plastic. To form a paper cover 3, the backing is provided with a fat resistant coating and the adhesive joint is implemented using a type of frost-resistant glue accepted for use in foodstuff applications and having a minimum frost resistance of -20°C. In the case of a plastic cover, a coating of clear polypropylene and a backing of clear polyester (35g/m²) or clear polypropylene (50 g/m²) are used, and the gluing is done using ordinary frost-resistant glue with a frost resistance of -20°C. Different combinations of backing and adhesive part may consist of a clear adhesive part with a clear backing, a clear adhesive part with a white backing, in which case the backing is made of paper, and a white adhesive part with a white backing, both of paper. Moreover, we would like to point out that a paper adhesive part and paper backing are biodegradable material, so they can be composted, recycled, disposed of together with bio-waste or utilized by burning.

Fig. 3 presents a preferred example of cover structures for use in automated production, comprising a combination of an adhesive part 5 and a backing 4. In addition, Fig. 3 shows a tear-off corner 8a, which may also be formed in the adhesive part 5. It differs from a tear-off corner of the case in that it is not perforated but forms a fixed portion of the adhesive part 5 and the cover 3. When the cover 3 is mounted in place, the tear-off corner 8a will adhere to the tear-off part 8 shown in Fig. 1, and when the tear-off part 8 is detached from the case, the cover will also be detached. The elongate sheet presented in Fig. 3 consists of a series of ready-made cover elements. The use of cover elements will be explained in detail with reference to the flow diagram in Fig. 4.

In a preferred embodiment of the method of the invention for the packaging of foodstuffs, a portion of the foodstuff to be packaged is first introduced into a case or food casserole according to the invention, step 41. Next, in step 42, the case is either passed on to a baking stage, step 43, or taken to step 44 in order to be provided with a cover 44. After the baking, the case is moved to a casing device to have a cover mounted on it. The cover 3 is mounted onto the case e.g. by using a sticker application device known in itself, by means of which an adhesive cover is applied to the casserole. Such a sticker application device is used for attaching various stickers to packages and equivalent. An example of a sticker application device that may be used is the Collamat® 3600 developed by Collamat Stralfors AG. While the cover is being applied onto the casserole, step 44, the extra portions of the backing 4 and adhesive part 5 are simultaneously removed from the cover sheet combination. This extra portion is indicated in Fig. 3 by reference number 9. After the cover 3 has been mounted on the casserole, the casserole together with the cover is passed under a roller, step 45, to ensure a tight adhesive joint of the cover. If the cover elements are arranged in a successive series as shown in Fig. 3, they can be kept rolled-up in the sticker application device in the same way as normal stickers. This allows automatic mounting of the cover on the case.

The invention is not restricted to the examples of its embodiments described above; instead, many variations are possible within the scope of the inventive idea defined in the claims.

## Claims

1. Package for the packaging of foodstuffs, said package comprising
a case (1) capable of being opened and closed and comprising a mounting part (2),
a cover (3) fitted to close the case when fastened to the mounting part,
**characterized in that** the mounting part (2) and the cover (3) are designed to be attached to each other by gluing.

2. Package as defined in claim 1, **characterized in that** the cover (3) comprises a backing (4) whose size and shape have been adapted to the size and shape of the open part of the case (1) and an adhesive part (5) comprising an adhesive surface (6), and that the backing (4) and the adhesive part (5) are so attached to each other that the adhesive part extends beyond the edge of the backing, to be fastened to the mounting part (2).

3. Package as defined in claim 1 or 2, **characterized in that** the cover (3) is so joined to the case (1) that the backing (4) and the case (1) together form a unitary closed space.

4. Package as defined in any one of claims 1 - 3, **characterized in that** the case (1), the backing (4) and/or the adhesive part (5) have been manufactured from biodegradable material.

5. Package as defined in any one of the preceding claims 1 - 4, **characterized in that** the case (1) is a foodstuff casserole.

6. Package as defined in any one of the preceding claims 1 - 5, **characterized in that** the mounting part (2) has been formed by bending the edges (7) of the case (1) outward, said outward bent edges forming a gluing mounting for the adhesive part (5).

7. Package as defined in any one of the preceding claims 1 - 6, **characterized in that** the adhesive part (5) has been formed from a repeatedly releasable type of glue.

8. Package as defined in any one of the preceding claims 1 - 7, **characterized in that** the case comprises a tear-off part (8) perforated so as to be detachable from the case; and that the cover (3) is so attached to the tear-off part (8) that, when the tear-off part is detached, the cover is also detached from the case.

9. Method for the packaging of foodstuffs in a case, in which method
a portion of the material to be packaged is introduced into the case; and
the case is closed with a cover
**characterized in that** the cover is glued onto the case.

10. Method as defined in claim 9, **characterized in that** the cover is glued using a repeatedly releasable type of glue.

11. Method as defined in claim 9 or 10, **characterized in that** the cover is formed from two parts so that it comprises a backing and an adhesive part, the cover being placed on the case so that the backing and the case together form a closed space.

12. Method as defined in any one of claims 9 - 11, **characterized in that** the case is perforated so as to form a tear-off part in it; and
the adhesive part is glued to the tear-off part.

13. Method as defined in any one of the preceding claims 9 - 12, **characterized in that** the glued cover is pressed against a mounting part to ensure a tight adhesive joint.

14. Method as defined in any one of the preceding claims 9 - 13, **characterized in that** the backing and adhesive part materials are placed one over the other to form a cover before its being mounted on the case; and
the backing and the adhesive part are perforated so as to form pieces corresponding to the size and shape of the cover.
